# EUROPÄISCHE PATENTANMELDUNG

(11) **EP 1 355 165 A2**
(43) Veröffentlichungstag der Anmeldung: **22.10.2003**
(21) Anmeldenummer: 03009179.7
(22) Anmeldetag: 22.04.2003
(51) Int. Cl.: G01V 1/00

(54) **Verfahren und Vorrichtung zur Erdbebenvorhersage und Epizentrumsortung mittels Sferics-/Atmospherics-/Technics-Spektrumsanalyse**

(30) Priorität: 18.04.2002 DE 10217412
(71) Anmelder: Konig, Florian Meinhard, 82110 Germering (DE)
(72) Erfinder: Konig, Florian Meinhard, 82110 Germering (DE)
(74) Vertreter: Englaender, Klaus, Dipl.-Ing.

(57) **Zusammenfassung**

Die Erfindung betrifft ein Verfahren zur Erdbeben- sowie Vulkanausbruchsvorhersage und Epizentrumsortung mittels Sferics--/Atmospherics-/Technics-Spektrumsanalyse. Die Erfindung sieht vor, atmosphärische, niederfrequente ELF-Signale oder elektromagnetische Felder (z.B. Sferics) über antennenartige Elemente zu erfassen, die Sferics/Technics danach (echtzeit-) gefiltert, später (echtzeit-)spektral-analysiert hinsichtlich zeitlich erstreckter, höchst niederfrequenter ULF-Anomalien (Ein-/Umhüllende) zu untersuchen und danach gegebenenfalls die magnetischen Felder in ihren Richtungskomponenten unterteilt zuzuordnen. Hieraus wird schließlich der Ursprung, also die Richtung der ULF-Anomalie, und damit der Ort des zu erwartenden Erdbebens ermittelt. Diese Ortung wird an den Vorhersageort, z. B. per Erdbebenvorwarnsignal, übertragen.

## Beschreibung

Die Erfindung betrifft ein Verfahren und eine Vorrichtung zur Erdbeben- sowie Vulkanausbruchsvorhersage und Epizentrumsortung mittels Sferics-/Atmospherics-/Technics-Spektrumsanalyse (im folgenden auch als SAT-Spektrumsanalyse bezeichnet).

Insbesondere liegt die vorliegende Erfindung auf dem Gebiet der Erfassung und Analyse von natürlichen und künstlichen atmosphärischen elektromagnetischen Feldern, die auch als Vorhersage für Wetterlagen Verwendung finden (Hans Baumer, "Sferics", 1987 Pfaffenhofen).

Heutzutage ist es problematisch, künstliche (z.B. Technics) und natürliche (z.B. Sferics) elektromagnetische Felder zu erfassen, da prinzipiell der gesamte Frequenzbereich dieser Felder durch vom Menschen genutzte Übertragungstechniken durchsetzt ist. Insbesondere außerhalb von menschlichen Ballungszentren stößt man auf im wesentlichen naturbelassene, elektromagnetische Felder (Herbert L. König, "Unsichtbare Umwelt", 1986 München). Die Wirkung von Sferics ist vielfach erwiesen (Dissertationen) und nimmt z.B. wetterlagenabhängig Einfluss auf das Schlafverhalten und allgemein auf das Wohlbefinden und den Gesundheitszustand des Menschen bzw. von Bioorganismen.

Im Artikel "Experiments to locate sources of earthquake related ULF electromagnetic signals" (Proceedings Japan Academy, 73, Ser. B. Nr. 3, 1997) wurde erstmals auf die Ähnlichkeit zwischen Sferics-Impulsen und Erbeben-ULF-Signalformen hingewiesen. Hierdurch gewonnene Erdbebenvorhersagen erfordern jedoch eine magnetische Ultra Low Frequency- bzw. ULF-Felderfassung, was unvermeidlich mit hohem ULF-Spulen-/Verstärker-/Signal-Datenverarbeitungs-Aufwand einhergeht. Angeblich sollen Erdbeben durch ULF-Felderfassung ca. bis zu zwei Tage vor Auftreten von Erdbeben vorhersagbar sein. Voraussetzung ist jedoch das Vorliegen langwellenbezogen (Wellenlängen typischerweise von 20 Kilometern und mehr) ungestörter Messverhältnisse. Diese Voraussetzung ist in unserer heutigen Zeit aufgrund verschiedener Störstrahler nur selten ausreichend realisierbar. Eine derartige Erdbebenvorhersage ist nicht zuverlässig, in jedem Fall sehr aufwendig und damit insgesamt wenig praxisgerecht. Teilweise werden zur Erdbebenvorhersage auch künstliche, mit Trägersignalen vergleichbare Magnetfelder ausgesendet bzw. genutzt (wie OMEGA- bzw. Navigationssignale mit einer Frequenz von 12 und 15 kHz, Radio-/Fernseh-Niederfrequenzsignale mit einer Frequenz von 16 und 18 kHz) und auf das Vorliegen von Erdbeben untersucht.

Eine Aufgabe der vorliegenden Erfindung besteht darin, ein einfaches Verfahren und eine Vorrichtung unter Nutzung bekannter Mittel zur Erdbeben- sowie Vulkanausbruchsvorhersage und zur Epizentrumsortung (im folgenden der Einfachheit halber global als Erdbebenvorhersage bezeichnet) mittels Sferics-Technics-Spektrumsanalyse zu schaffen, das keinen niedrigstfrequenten Signalempfänger wie schmalbandige Spulen und hierfür geeignete Verstärker und Analysatoren benötigt.

Gelöst wird diese Aufgabe durch die Merkmale hinsichtlich des Verfahrens durch die Merkmale des Anspruchs 1 und hinsichtlich der Vorrichtung durch die Merkmale des Anspruchs 14.

Vorteilhafte Weiterbildungen der Erfindung sind in den Unteransprüchen angegeben.

Das erfindungsgemäße Verfahren und die erfindungsgemäße Vorrichtung nutzen demnach zur Erdbebenvorhersage mit einfachen Mitteln, nämlich relativ simplen Antennenelementen, erfassbare atmosphärische, niederfrequente ELF-/VLF-Signale (ELF steht für Extremely Low Frequency, VLF steht für Very Low Frequency) bzw. elektromagnetische Felder in Gestalt von Sferics/Atmospherics, wobei die erfassten ELF-/VLF-Signale bzw. elektromagnetischen Felder (echtzeit-)gefiltert und (echtzeit-)spektral analysiert werden, um zeitlich erstreckte, höchst niederfrequente ULF-Anomalien (Ein-/Umhüllende) zu ermitteln, und wobei hieraus der Ursprung, vor allem die Richtung der ULF-Anomalie mittels mehrerer mit großem Abstand, vor allem mit einem Abstand von mehr als tausend Kilometer, angeordneter Empfänger-/Analyseeinheiten geortet wird.

Bevorzugt sind die Empfänger-/Analyseeinheiten rechnergestützt gebildet und mit zugehörigen Sektorspulenempfängern über die Erde bzw. einen Bereich der Erde verteilt.

Die Extraktion einer erfindungsgemäß für die Erbebenvorhersage genutzten Sferics-Technics-untypischen ULF-Anomalie verläuft bevorzugt auf Grundlage einer breitbandigen Echtzeit-Spektrumsanalyse unter Kurzzeitsignalwertemittlung als Funktion der Spektrumsanalysefrequenz im Millisekundenbereich und unter Zeitdarstellung bzw. Auflösung im Sekunden- oder Minutenbereich. Genutzt wird ferner eine Echtzeit-Zusatzanalyse in der frequenzbezogenen, schmalbandigen Sferics-Technics-Spektrumsanalyse mit dem Prozedurinhalt eines breitbandigen, zeitbezogenen Sferics-Technics-Signalintensitätsvergleichs über den Analysezeitbereich von einigen Hundert Millisekunden bis hin zu Minuten. Die erfassten Sferics-Technics-Wechselsignal-Gesamtintensitätsschwankungen werden mathematischdatenrechnerisch hinsichtlich einer sinus- oder sinusquadrat-ähnlichen Einhüllenden oder Umhüllenden bzw. Signalfunktion korrelierend verglichen. Meistens zeigen sich diese Einhüllenden als bauchige Maxima bzw. Minima in den Sferics-Technics-3D-Spektrogrammen. Ferner zeigen sie sich in dominanten Technics mit spitzenartigen OMEGA-Signalsequenzen bei 12/12,5/15 kHz sowie in breitbandige Sferics, welche u.a. annähernd Pegelnullstellen aufzeigen.

Eine Erdbeben-Vorwarnungsiniziierung erfolgt erfindungsgemäß nach Extraktion der o.g. ULF-Anomalie in bevorzugter Prozedurfolge, demnach mindestens zwei höchst niedrigstfrequente, sinus-ähnliche Ein-/Umhüllende der Sferics-Technics-Analysesignale in drei Messanalyserichtungen, jeweils lokal in ortsgebundenen Sferics-Technics-Analyseeinheiten gewonnen werden, wobei hieraus ein Warnsignal abgeleitet und an entfernte Sferics-Technics-Analyseeinheiten übermittelt bzw. übertragen wird. Bevorzugt senden sich mehrere Sferics-Technics-Analyseeinheiten annähernd zeitgleich gegenseitig Warnsignale zu.

Im einzelnen sieht das erfindungsgemäße Verfahren zur Lokalisation eines bevorstehenden Erdbebens vorzugsweise vor, dass zunächst die Intensität und/oder Schwankungsbreite der höchst niedrigstfrequenten, sinus-ähnlichen Einhüllenden jeweils in den erfassten zwei horizontalen und vertikalen Sferics-Technics-Analysesignalen bzw. -Spektren verglichen und zu einem Faktor und/oder Winkelmaß bzw. -grad und/oder als exponentielle Darstellungsfunktion im Sinne eines Richtungszeiger bzw. -vektor, in Abhängigkeit der lokalen Längen- sowie Breitengerade des Planeten Erde eingerechnet werden, woraufhin diese Information den weiteren Sferics-Technics-Analyseeinheiten als ortsentfernte Lokalisations-Vektorinformation übermittelt wird. Schließlich wird zumindest aus der vertikalen Lokalisations-Vektorinformation ein mathematischer Schnittpunkt der Geraden in den Sferics-Technics-Analyseelementen als Ort des vorhergesagten Erdbebens ermittelt.

Schließlich beinhaltet die erfindungsgemäß vorgesehene sektorielle Richtungsunterteilung der ULF-ELF-Signal-Erfassung vorzugsweise folgende Ausgestaltungen. Die horizontalen ULF-ELF-Signalantennen mit zugehörigen Antennensignalen und nachfolgender Sferics-Signalanalyse werden auf mehrere Richtungssektoren zu ≤ 90 Grad unterteilt. Die Richtungssektoren weisen zu je ≤ +/-45 Grad um die Richtungen Nord, Süd, West, Ost eine Charakteristik-Keule auf. Niederfrequent hoch magnetisch leitende, also mit einer hohen Permeabilität versehene Metallelemente (wie u. a. Elemente aus MU-Metall) um das Sferics-Signal-Antennenelement sind V-förmig, einen Winkel kleiner/gleich 90 Grad einschließend gebildet. Die V-förmig gebildeten Richtungsselektionsantennen werden manuell und/oder motorgesteuert schwenk- bzw. drehbar aufgestellt.

Vorteilhafterweise ist vorgesehen, dass die Analyse der erfassten ELF-/VLF-Signale eine breitbandige Echtzeit-Spektrumsanalyse mit je Spektrumsanalysefrequenz, Kurzzeitsignalwertemittelung im Millisekundenbereich und Zeitdarstellung bzw. Auflösung im Sekunden- oder Minutenbereich umfasst, um extreme Spitzenpegel der ELF-/VLF-Signale bzw. der elektromagnetischen Felder zu unterdrücken, die keine Information bezüglich ULF-Anomalien enthalten. Dies gewährleistet eine visuelle dreidimensionale Spektrumsanalyse-Fensterauflösung für einen Betrachter, die anpassungsfähig ist. Dadurch wird der Tatsache Rechnung getragen, dass die Anomalienperiodenzeit von typischerweise 2 bis 20 Sekunden nicht vorhersagbar ist, wodurch erst eine Wiederholung nach 4 bis 40 Sekunden visuell erkennbar wird.

Vorteilhafterweise ist vorgesehen, dass die Antennenelemente und/oder Zuleitungselemente zusammen verknüpft mindestens einige Dezimeter Länge aufweisen und aus einem elektrisch sowie elektromagnetisch leitfähigen Material bestehen.

Außerdem ist erfindungsgemäß vorgesehen, dass der Sferics-Wechselsignalverstärker breitbandig einen Frequenzbereich von einigen 10 Kilohertz obere Grenzfrequenz bis ≤ einige Hertz umfasst und eine Signaldynamik von mindestens 50 dB aufweist.

Bevorzugt wird die Sferics- bzw. atmosphärische Wettersignal-Datenverarbeitung in Echtzeit mit ortsabhängig-variabler programmierbarer, schmalbandig-digitaler Filterungscharakteristik (in einer Filterungsebene) durchgeführt.

Nachfolgend wird die Erfindung anhand der Zeichnung beispielhaft näher erläutert; in dieser zeigt:
- Fig. 1: schematisch in Blockschaltbilddarstellung eine Abfolge von Signalerfassungs- sowie Verarbeitungsschritten für eine erfindungsgemäße Erdbebenvorwarnung,
- Fig. 2: eine Analysegraphik (3D-Spektrogramm) eines typischen Sferics-Technics-Frequenz-Zeit-Verlaufs bei Tiefdruckwetterlage (Dauerregen im April 2002) mit biotop hoch wirksamen Sferics-Signalspektrumsspitzen ohne erfindungsgemäß zur Erdbebenvorhersage genutzten ULF-Anomalien, und
- Fig. 3: eine Analysegraphik (3D-Spektrogramm) eines typischen Sferics-Technics-Frequenz-Zeit-Verlaufs nach Kaltlufteinbruch sowie Zwischenhochdruck-Wetterlage (zzgl. Schneedecke in Oberbayern am 25.03.2002 vormittags) mit für die Erdbebenvorhersage erfindungsgemäß genutzten ULF-Anomalien (bzw. Ein-/Umhüllender im Niedrigstfrequenzmagnetfeldspektrum).

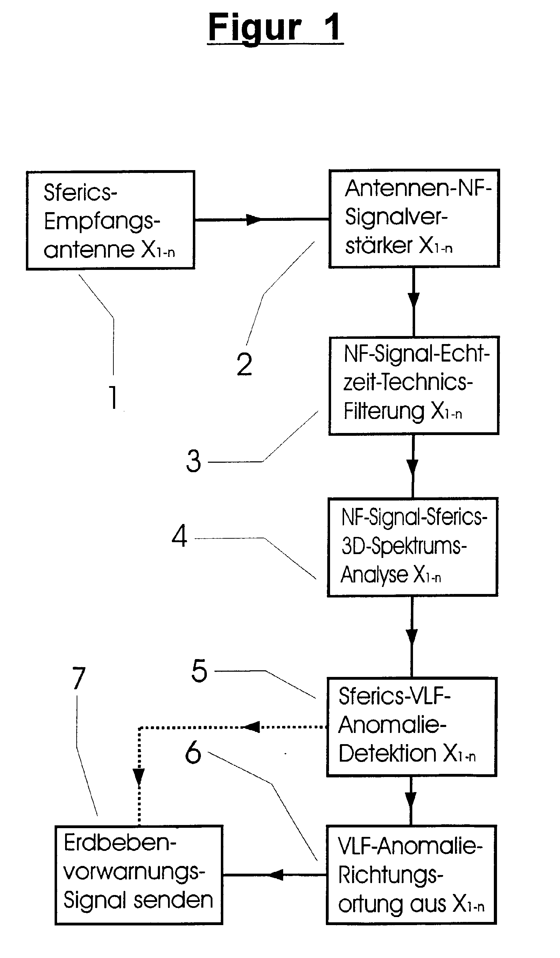

In Fig.1 ist schematisch eine Ausführungsform der erfindungsgemäßen Sferics-Signalanalyse mit ihren Verfahrensschritten gezeigt.

Ein Sferics-Magnetfeldempfang durch mehrere (Anzahl X = 1 bis n) Antennenelemente ist in Fig. 1 mit der Bezugsziffer 1 bezeichnet. Die Anzahl X von Antennenelementen bezieht sich (in den Blöcken 1 bis 6) erfindungsgemäß auf eine analytische Sferics-Technics-Richtungserfassung gemäß Block 6 in den vertikalen und horizontalen Feldrichtungsebenen (zzgl. in Sektoren). Im Schritt 2 sind mehrere (Anzahl X = 1 bis n), breitbandige NF-/Niederfrequenz-Antennensignalverstärker bzw. -amplifier dargestellt. Danach folgt der Block (Schritt) 3 mit einer Echzeit-Herausfilterung von Pegel-hochdominanten, künstlichen, elektromagnetischen Feldkomponenten (Technics) aus dem eigentlichen Nutzsignal, also dem "verschmutzten" Sferics-Signal. Die zeitaufgelöste und damit dreidimensionale Spektralanalyse der Frequenzanteile der Sferics-Niederfrequenzsignale erfolgt im Block bzw. Schritt 4.

Ein sich typischerweise vor einem Erdbeben oder Vulkanausbruch atmosphärisch ausbreitendes, höchst niederfrequentes, sehr langwelliges (Wellenlänge von ca. 100 km bis 100.000 km) elektromagnetisches ULF-Signal, welches offensichtlich durch eine terrestrisch-atmospärische Einkopplung entsteht, wird in dem Block/Schritt 5 zur Detektion von ULF-Anomalien, also der sogenannten Ein-/Umhüllenden genutzt. Nach Erkennung einer ULF-Anomalie 5 samt Richtungsdetektion 6 erfolgt im Block/-Schritt 7 die Aussendung eines (bezüglich Epizentrum örtlich gezielten) Erdbeben-/Vulkanausbruch-Vorwarnsignals.

Eine realitätsnahe Ausführungsform für eine Vorrichtung zur Durchführung des Verfahrens gemäß Fig. 1 sieht zumindest zwei etwa 10.000 km voneinander entfernte Sferics-Technics-Analysesysteme vor, die permanent aufzeichnungs-/erfassungsaktiv sind und jeweils drei Antennen 1 aufweisen. Diese Antennen umfassen zumindest eine Vertikalantenne für (Technics-) Sferics-Aktivitäten in der horizontalen Erdoberflächen-Ausbreitungsrichtung. Besonders bevorzugt sind vier Sektorantennen (Sferics-Technics-Erfassung in Richtung Norden/Süden/Osten/-Westen, Öffnungswinkel < 90 Grad) mit MU-Metallabschirmung und vorbestimmter Richtcharakteristik vorgesehen. Außerdem umfassen die Antennen zwei zueinander rechtwinklig angeordnete Horizontalantennen für senkrechte ULF-ELF-Strahlungsereignisse, die vom Boden ausgehend zur Ionosphäre je in Ost-West- sowie Nord-Süd-Richtung aufsteigen.

Die Erfindung bezieht sich auf das allgemein bekannte Induktionsgesetz für die Ausbreitung von magnetischen Niederfrequenzfeldern bzw. Wellen an den jeweiligen Sektorenantennen. Elektrophysikalisch muss die Frage beantwortet werden: Wo kommen die ULF-Felder des unmittelbar bevorstehenden Erdbebens (Vulkanausbruchs) her? Welche Richtungsantenne (siehe o.g. 6 Antennen; X₁₋ₙ) erfasst eine größere ULF enthaltende, magnetische Durchflutung zur maßgeblichen ULF-Anomalie-Richtungserkennung?

Die Erfindung sieht nach dem Block 1 (Fig. 1) eine breitbandige (niederfrequente), diskrete Verstärkung (Block 2) aller Kanäle (X₁₋ₙ) u. a. im Frequenzbereich von 20 bis 20.000 Hz vor, damit nachfolgende, rechnergestützte Datenverarbeitungsvorgänge (Blöcke 3, 4) mit vorgeschalteten Analog-Digital-Signalwandlern eine ULF-ELF-Signal-Spektrumsanalyse erlauben. Im einzelnen erfolgt mittels digitaler Algorithmen eine Herausfilterung (Block 3) von Pegel-dominanten Technics-Signalanteilen (enthaltend einen 50 Hz Netz-Brumm plus Oberwellen oder TV-Signal bei 16 - 18 kHz) vorzugsweise in Echtzeit. Dies betrifft im dargestellten Beispiel alle sechs Signalkanäle (X₁₋ₙ). Danach findet unmittelbar eine Fast-Fourier-Analyse (s. rechnergestützte Filter gemäß FIR- oder FFT-Prozeduren) oder Spektralanalyse (Block 4) in Abhängigkeit vom Echtzeitereignis aufgelöst statt, welche u. a. in eine 3D-Darstellung ausmündet (auch bei Nicht-Echtzeit-Analyse, damit ULF-Anomalien erkennbar sind). Dies betrifft im dargestellten Beispiel wiederum sämtliche sechs Signalkanäle (X₁₋ₙ).

Rechnergestützte FIR-/FFT-Prozeduren im Frequenzbereich von ungefähr 20 bis 20.000 Hz erlauben dabei eine über den Zeitmaßstab laufende Untersuchung, d.h. eine Analyse von zeitabhängigen Welligkeiten des 3D-Spektrumverlaufes in den Sferics-Technics-Signalen, die als Gesamtintensitäts- oder Teilschwankungen der erfassten und ggf. verstärkten (Omega-Signal- bzw. Technics- und) Sferics-Aktivitäten, je (Richtungsantennen-) Signalkanal (X₁₋ₙ). Diese im Fall eines bevorstehenden Erdbebens detektierten ULF-Artefakte/-Anomalien (Block 5) unterliegen einer permanenten, auf periodische Vorgänge ausgelegten ULF-Mustererkennung mittels (Zeitmaßstabs-) Kreuzkorrelation der Referenz-Erdbeben-Signalmuster mit dem Echtzeitsignal (je Kanal). Bei Auftreten der ULF-Artefakte findet im Analysesystem ein unmittelbarer Datentransfer von Kanal zu Kanal (z.B. sechs Empfangsrichtungs-Kanäle oder X₁₋ₙ) als Vergleichsinformation statt. Im wesentlichen ist davon auszugehen, dass in mindestens zwei (Empfangsrichtungs-) Signalkanälen solche ULF-Anomalien/-Artefakte auftreten bzw. zu detektieren sind.

Ist dies der Fall, findet die ULF-Detektion automatisch um den Schritt des rechnerischen Vergleichs der ULF-Signalanteilsintensitäten zwischen den einzelnen Signalkanälen (welche den richtungsspezifisch empfangenen Sferics-Technics-Signalen entsprechen) statt. Aus den mindestens vier einzelnen (Längenbreitengrade oder Ost-/West-/Nord-/Südrichtung), horizontalen und zwei vertikalen Sferics-Technics-Signalkomponenten (inkl. der ULF-Anomalien oder extrahierter ULF-Anomalien) regeneriert sich schließlich eine richtungsvektorielle (X₁₋ₙ) Intensitätsauflösung der ULF-Anomalie-Signalanteile (X₁₋ₙ), die ein präzise ULF-Anomalie-Richtungsortung (Block 6) bzw. ein vorherzusagendes Epizentrum ergibt.

Das Analysesystem generiert bei gegebener Datensignifikanz bezüglich eines Erdbeben-/Vulkan-Ausbruch-Vorhersagefalls ein Warn- oder Alarmsignal 7, das in die ermittelte Epizentrumsrichtung (Ort des vorhergesagten Erdbebens) übertragen/mitgeteilt wird. Ggf. wird eine Vorwarnung über den Weg der jeweiligen landesbezogenen Exekutive an die besagte Region übermittelt, wenn im Epizentrum kein erfindungsgemäßes Analysesystem mit Empfangseinheit installiert ist.

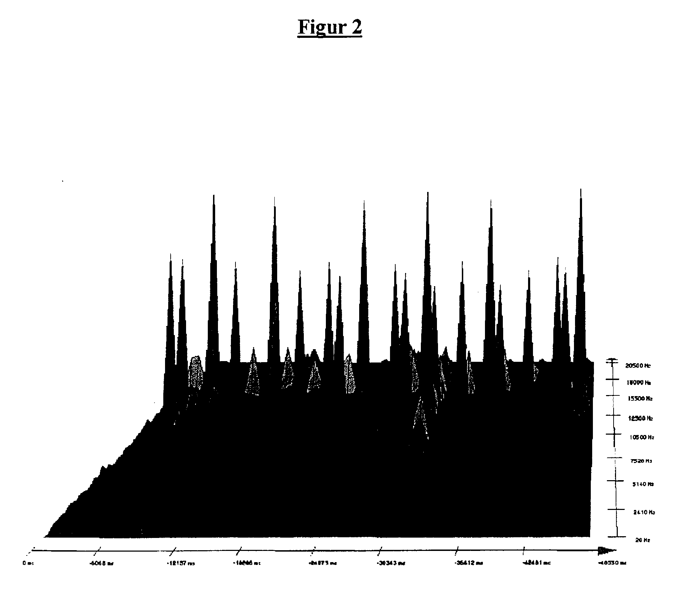

Die Abfolge der vorstehend genannten Sferics-Technics-Analyseschritte wird im Vergleich der Fig. 1 und 2 verständlicher, zumal hier ein historisch außergewöhnlicher Fall registriert wurde (ein paar Stunden vor einem Erdbeben in Afghanistan am 25.3.2002).

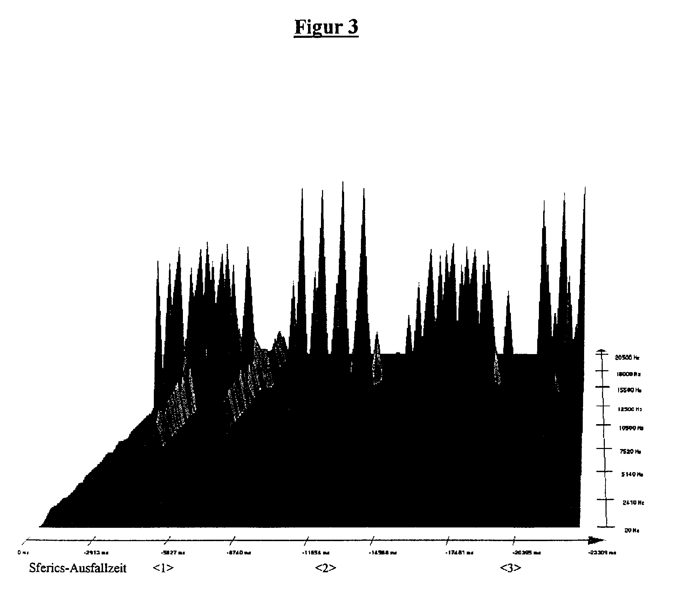

In Fig. 2 ist eine über ca. 46 Sekunden abgelaufene typische Sferics-3D-Spektrogramm-Analyse gezeigt, bei der die Intensität auf der Y-Achse, der Zeitverlauf auf der X-Achse und die Frequenzlage der Impulse auf der Z-Achse aufgetragen sind (die X-, Y-, Z-Achsen der Fig. 3 sind identisch belegt).

Messort-typische Fernsehsignal-Dauermodulationen um 16/18 kHz und leichte 50-Hz-Netzbrummanteile samt Oberwellen bis 400 Hz sind herausgefiltert (ebenso in Fig. 3). Markante OMEGA-Technics-Signalanteile sind bei ca. 12,5 kHz und insbesondere bei 15 kHz zu erkennen und scheinen auf den ersten Blick periodisch aufeinander zu folgen. Bei genauerer Betrachtung der Graphik treten sie jedoch mit unterschiedlichen Zeitabständen auf. Ferner sind einige pegelschwächere Sferics-Breitbandimpulse zu erkennen. Es ist jedoch keinerlei ULF-Ein- oder Umhüllende (Vor-Erdbeben-Magnetfeldanomalie) zu erkennen. D. h., die Abhängigkeit von den erfassten Sferics/Technics lässt keine Erdbeben- oder Vulkanausbruchs-Konstellation erwarten.

Die gezeigten, für eine bestimmte Wetterlage charakteristischen, spektralen Verteilungen der Sferics/Technics können breitbandiger und spektralfrequenz-bezogen zwischen vornehmlich 2 kHz und 19 kHz wesentlich "chaotischer" bzw. "vermischter" erfasst werden, was in Fig. 2 für eine biotop-"depressive", ungünstige Tiefdrucklage kennzeichnend ist (spitz verlaufende OMEGA-Signalanteile bei 15 kHz).

In Fig. 3 hingegen fällt sofort eine Periodizität im Zeitmaßstab auf, demnach in der 3D-Analysegraphik im Abstand von ca. 7 Sekunden ein komplettes Technics-Signalmoment (einige 100 ms) ausgefallen ist (die Zeitpunktmarkierungen "<1>, <2>, <3>" an der X-Achse <> breitbandiger Pegel gegen 0 dB). Dieses 3D-Spektrogramm wurde in Oberbayern um 10.10 Uhr, also eindeutig vor dem großen Erdbeben in Afghanistan am 25.3.2002 (Ortszeit in Afghanistan ca. 15 Uhr mit einer Erdbebenstärke von weit über 6 auf der Richterskala), aufgenommen. Typische Nachbeben wurden je nach Sferics-Messmöglichkeiten bis in den April 2002 "vorerfasst", wobei diese in den 3D-Spektrogrammen bzw. Analysen keine markanten Sferics-Auslöschungen offenbaren. Die herausgelesene Periodizität schwankte dort im Bereich von einigen Sekunden bis einigen Zehn Sekunden.

Aus Fig. 2 und 3 folgt, dass erfindungsgemäß eine Sferics-Technics-ULF-Anomalie (oder -Artefakt) sogar in einer Entfernung von gut 10.000 km vorliegt. Aus der Abfolge der Prozedurschritte/-blockelemente 3 bis 5 gemäß Fig. 1 resultiert aus dem zeitabhängig schwankenden spektralen Intensitätsverlauf die eigentliche ULF-Anomalie (Wellenlängenvergleich: 15 kHz <> 20 KM; 0,15 Hz <> 0,15 Hz <> 2 Million KM). Die Detektion dieser ULF-Schwankung/-Einbrüche im 3D-Spektrogramm erfolgt über die Korrelation des Verlaufes des Zeitspektrums mit einer Funktion nach Schwankungsbreite, -zeit und -intensität. Bei Übereinstimmung mit ausgesuchten und vorgegebenen Korrelationsparametern, die dem einer Vor-Erdbebensituation entsprechen, wird ein Vorwarnsignal abgeleitet und ausgesendet.

Ein zeitlich zweidimensional (Intensität in Abhängigkeit von der Frequenz) aufintegriertes Summenspektrum ist hierbei zur Detektion/Erkennung/Visualisierung offenkundig nicht dienlich.

Der Vollständigkeit halber wird bemerkt, dass trotz einer beispielhaften Sferics-Technics-Datensignalerfassung und - Analyse im Frequenzbereich von ca. 20 Hz bis 20.000 Hz die eigentlich unter 20 Hz liegenden (im Millihertz-Bereich der ULF-Artefakte), erdbeben-vorwarnungstypischen ULF-Anomalien (Ein-/Umhüllende) in den besagten 3D-Spektrogrammen gemäß Fig. 3 eindeutig hervortreten. Die ULF-Anomalien können wie folgt auftreten: Ein bevorstehendes, nach der gängigen Richter-Erdbebenskala
- schwächeres, zeitkurzes Ereignis lässt schwächere und kürzere Sferics-Auslöschungszeitpunkte in der Signalanalyse erwarten (schwerer erkennbar/analysierbar; desgleichen auch bei zunehmendem oder größerem Abstand zum Erdbeben-/Vulkanausbruchsherd),
- schwächeres, zeitlängeres Ereignis hinterlässt schwächere und längere/breitere Sferics-Technics-Auslöschungszeitpunkte in der Signalanalyse,
- stärkeres, zeitkurzes, näher stattfindendes Ereignis lässt stärkere und kürzere Sferics-Auslöschungszeitpunkte in der Signalanalyse erwarten (besser erkennbar/analysierbar; desgleichen auch bei angenähertem Abstand zum Erdbeben-/Vulkanausbruchsherd),
- stärkeres, zeitlängeres, distanz-entfernteres Ereignis lässt stärkere und längere/breitere Sferics-Auslöschungszeitpunkte in der Signalanalyse erwarten (besser erkennbar/analysierbar; desgleichen auch bei angenähertem Abstand zum Erdbeben-/Vulkanausbruchsherd) und schließlich,
- ist die Periodendauer oder Frequenz der Ein-/Umhüllenden (samt Oberwellen durch geophysikalische Bedämpfungen sowie Reflexionen) sehr unterschiedlich, wahrscheinlich in Abhängigkeit der Entfernung vom Ereigniszentrum vergleichsweise zu- oder abnehmend und
- die Sferics-Technics-Ausfallmomente liegen offenkundig in einem Messzeitraum gemäß einer Gauß-Umhüllenden (sinusartige, eingehüllte Schwingung mit Maxima bei Sferics-Pegelmaxima sowie Minima bei Sferics-Technics-Ausfallmomenten/-Minima) und treten periodisch mit einer Frequenz z. B. von 0,12 Hz ansteigend und abfallend über einige 10 bis 100 Sekunden auf, und verschwinden sodann für einige 100 bis 1000 Sekunden, um schließlich wieder aufzutauchen; alternativ variiert die sinusartige Schwingung in der Gauß-Umhüllenden in ihrer Frequenz kontinuierlich.

Im Rahmen einer theoretischen Modellierung um diese o.g. ULF-Anomalien konnte aus mehr als sieben heftigeren Erdbeben eine Berechnungsfunktion hergeleitet werden. D. h., aus den Daten von Erdbeben in Afghanistan, Tiflis, Costa Rica, Taiwan, Chile (Distanz zwischen 2800 KM und 12000 KM) ab Frühjahr 2002 kann eine Gerade D = 0,86 * T generiert werden. Hierzu wurden dabei die Koordinaten der Distanz D und der erfassten Anomalieperiodenzeit T je Messpunkt oder Erdbebenereignis aufgetragen, welche wertebezogen weniger als 5% schwankten und ergaben überraschenderweise signifikant eine Gerade. Die erstmalige, exakte Lokalisation eines Erdbebens gelang am 09. sowie 12.10.2002, zumal jeweils eine interkontinentale Messung in Los Angeles und in Bayern innerhalb von wenigen Tagen für den Erdbebenfall in Brasilien möglich war. Die ermittelten Distanzen wurden per zweimaliger Zirkelkreissetzung auf einer Globus-/Weltkarte am jeweiligen Messpunkt eingetragen und ergaben einen geeigneten Schnittpunkt, der dem Epizentrum in Brasilien am 12.10.2002 entsprach.

## Patentansprüche

1. Verfahren zur Erdbebenvorhersage und Epizentrumsortung mittels SAT-Spektrumsanalyse (SAT steht für Sferics-/Atmospherics-/Technics) auf Grundlage einer ULF-Felderfassung (ULF steht für Ultra Low Frequency), **dadurch gekennzeichnet, dass**
atmosphärische, niederfrequente ELF-/VLF-Signale (ELF steht für Extremely Low Frequency, VLF steht für Very Low Frequency) bzw. elektromagnetische Felder in Gestalt von Sferics, Atmospherics, Technics über Antennenelemente erfasst werden,
die erfassten ELF-/VLF-Signale bzw. elektromagnetischen Felder (echtzeit-)gefiltert, (echtzeit-)spektral analysiert werden, um zeitlich erstreckte, höchst niederfrequente ULF-Anomalien (Ein-/Umhüllende) zu ermitteln, und hieraus der Ursprung, vor allem die Richtung der ULF-Anomalie mittels mehrerer mit großem Abstand, vor allem mit einem Abstand von mehr als tausend Kilometer, angeordneter Empfänger-/Analyseeinheiten geortet wird.

2. Verfahren nach Anspruch 1, **dadurch gekennzeichnet, dass** die erfassten ELF-/VLF-Signale bzw. elektromagnetischen Feldsignale sektoriell zur Ursprungs- bzw. Richtungsortung der ULF-Anomalie in ihre Richtungskomponenten zerlegt und in dieser Form analysiert werden.

3. Verfahren nach Anspruch 1 oder 2, **dadurch gekennzeichnet, dass** nach Ortung des Ursprungs bzw. der Richtung der ULF-Anomalie eine Erdbebenvorwarnung an den betreffenden Ort der Erde ausgesendet wird.

4. Verfahren nach einem der Ansprüche 1 bis 3, **dadurch gekennzeichnet, dass** die Analyse der erfassten ELF-/VLF-Signale einen ortsabhängig-variablen programmierbaren, schmalbandig-digitalen Filterungsschritt (Filterungsebene (3)) zum Abtrennen ortsabhängig variabler Technics-Störfelder, die nichts zur Ermittlung der ULF-Anomalien beitragen, wie etwa TV-Zeilensprungsignale oder Omega-Navigationssignale, umfasst.

5. Verfahren nach einem der Ansprüche 1 bis 4, **dadurch gekennzeichnet, dass** die Analyse der erfassten ELF-/VLF-Signale eine breitbandige Echtzeit-Spektrumsanalyse (4) mit je Spektrumsanalysefrequenz, Kurzzeitsignalwertemittelung im Millisekundenbereich und Zeitdarstellung bzw. Auflösung im Sekunden- oder Minutenbereich umfasst, um extreme Spitzenpegel der ELF-/VLF-Signale bzw. der elektromagnetischen Felder zu unterdrücken, die keine Information bezüglich ULF-Anomalien enthalten.

6. Verfahren nach einem der Ansprüche 1 bis 5, **dadurch gekennzeichnet, dass** die Analyse der erfassten ELF-/VLF-Signale eine Echtzeit-Zusatzanalyse in einer frequenzbezogenen, schmalbandigen Sferics-Spektrumsanalyse mit dem Prozedurinhalt eines breitbandigen, zeitbezogenen Sferics-Signalintensitäts-Vergleichs über ein Analysezeitintervall von einigen Hundert Millisekunden bis hin zu Minuten gemäß einer ULF-Anomalien-Detektion (5) umfasst, um periodische Anomalien in einem Fenster des Spektrums der ELF-/VLF-Signale bzw. der elektromagnetischen Felder aufzufinden.

7. Verfahren nach einem der Ansprüche 1 bis 6, **dadurch gekennzeichnet, dass** die Analyse der erfassten ELF-/VLF-Signale einen mathematisch/datenrechnerisch korrelierenden Vergleich zur Ermittlung signaltechnischer Identität von erfassten Sferics-Wechselsignal-Gesamtintensitätsschwankungen hinsichtlich einer sinus- bzw. sinus-quadrat-ähnlichen (einer Sinuskurve, die sich oberhalb einer Nulllinie befindet) Einhüllenden oder Umhüllenden bzw. Signalfunktion umfasst, die einer Anomalieform entspricht.

8. Verfahren nach Anspruch 7, **dadurch gekennzeichnet, dass** bei Auftreten mindestens zweier höchst niedrigstfrequenter, sinus-ähnlicher Ein-/Umhüllenden bzw. ULF-Anomalien der Sferics-Technics-Analysesignale in drei unterschiedlichen Messrichtungen jeweils lokal in ortsgebundenen Sferics-Technics-Analyseeinheiten ein Warnsignal (7) initiiert und dieses entfernten Empfangseinheiten bzw. Sferics-Analyseeinheiten am vorhergesagten Erdbebenort übermittelt bzw. übertragen wird.

9. Verfahren nach Anspruch 8, **dadurch gekennzeichnet, dass** mehrere örtlich beabstandete Sferics-Technics-Analyseeinheiten sich zumindest annähernd zeitgleich gegenseitig Warnsignale (7) zusenden.

10. Verfahren nach Anspruch 8 oder 9, **dadurch gekennzeichnet, dass** die Intensität und/oder Schwankungsbreite der höchst niedrigstfrequenten, sinus-ähnlichen Einhüllenden jeweils in zwei erfassten horizontalen und vertikalen Sferics-Technics-Analysesignalen bzw. -Spektren zur Ursprungs- bzw. Richtungsortung der ULF-Anomalie und zu einem Faktor und/oder Winkelmaß bzw. -grad und/oder zu einer exponentiellen Darstellungsfunktion als koordinatenbezogener Richtungszeiger bzw. -vektor in Abhängigkeit der lokalen Längen- sowie Breitengrade der Erde umgerechnet und der/den weiteren Sferics-Technics-Analyseeinheit(en) als ortsdistante Lokalisationsvektorinformation übermittelt werden.

11. Verfahren nach Anspruch 10, **dadurch gekennzeichnet, dass** zumindest aus vertikalen Lokalisationsvektorinformationen ein mathematischer Schnittpunkt der Geraden in dem/den Sferics-Technics-Analyseelementen ermittelt wird.

12. Verfahren nach einem der Ansprüche 8 bis 11, **dadurch gekennzeichnet, dass** bei fast ausschließlich vertikal vorliegender, höchst niedrigstfrequenter, sinus-ähnlicher Sferics-Signalanalyse-Anomalie/-Umhüllender, im Vergleich zu einer horizontalen Sferics-Technics-Signalanalyse-Anomalien/-ULF-Umhüllenden, das Epizentrum direkt vor Ort über die Sferics-Analyseeinheit messtechnisch erfasst wird.

13. Verfahren nach einem der Ansprüche 8 bis 11, **dadurch gekennzeichnet, dass** dann, wenn vertikale höchst niedrigstfrequente, sinus-ähnliche Sferics-Technics-Analysesignal-Umhüllende vorliegen, die höher sind als die entsprechenden horizontalen Umhüllenden, auf ein entfernter gelegenes Erdbeben geschlossen wird, während im umgekehrten Fall höherer horizontaler Umhüllender auf ein nahe gelegenes Erdbeben geschlossen wird.

14. Vorrichtung zur Durchführung des Verfahrens nach einem der Ansprüche 1 bis 13, **gekennzeichnet durch** mehrere, untereinander elektrisch und/oder elektromagnetisch verbundenen Sferics-Technics- bzw. Wetterstrahlungserfassungseinheiten und zugehörige Signalauswertungseinheiten,
mindestens zwei auf der Erde entfernt aufgestellte Sferics-Technics-Wechselsignal-Erfassungssysteme mit jeweils mindestens drei Antennenelementen (1), die in jeweils senkrechter bzw. vertikaler, horizontaler vorwiegend Ost-West- sowie Nord-Süd-Richtung ausgerichtet sind,
den Erfassungssystemen nachgeschaltete SAT-Datenverarbeitungs-, ELF-/VLF-Erfassungs- und ULF-Untersuchungseinheiten.

15. Vorrichtung nach Anspruch 14, **dadurch gekennzeichnet, dass** die über Zuleitungselemente verknüpften Antennenelemente (1) eine Länge von zumindest einigen Dezimetern aufweisen und aus einem elektrisch sowie elektromagnetisch leitfähigen Material bestehen.

16. Vorrichtung nach Anspruch 14 oder 15, **dadurch gekennzeichnet, dass** der Sferics-Wechselsignalverstärker (2) in den Erfassungssystemen breitbandig einen Frequenzbereich von einigen Zehn Kilohertz obere Grenzfrequenz bis kleiner/gleich einige Hertz umfassen und eine Signaldynamik von mindestens 50 dB aufweisen.

17. Vorrichtung nach Anspruch 14, 15 oder 16, **dadurch gekennzeichnet, dass** insbesondere die für die Erfassung horizontaler Sferics-Technics-Aktivitäten zuständigen, senkrecht aufgestellten Antennen (1) mit zugehörigen Antennensignalen und nachfolgender Sferics-Technics-Signalanalyse auf mehrere Richtungssektoren zu kleiner/gleich 90 Grad unterteilt sind.

18. Vorrichtung nach einem der Ansprüche 14 bis 17, **dadurch gekennzeichnet, dass** die Antennen-Richtungssektoren zu je kleiner/gleich +/- 45 Grad um die Richtungen Nord, Süd, West, Ost eine Charakteristik-Keule aufweisen.

19. Vorrichtung nach einem der Ansprüche 14 bis 18, **dadurch gekennzeichnet, dass** niederfrequent hoch magnetisch leitende, also mit einer hohen Permeabilität versehene Metallelemente - vorzugsweise MU-Metall - um das Sferics-Technics-Signal-Antennenelement V-förmig, einen Winkel kleiner/gleich 90 Grad einschließend, gebildet sind.

20. Vorrichtung nach Anspruch 19, **dadurch gekennzeichnet, dass** jeweils die V-förmig ausgebildeten Richtungsselektionsantennen manuell und/oder motorgesteuert schwenk- bzw. drehbar aufgestellt sind.
